# EUROPÄISCHE PATENTSCHRIFT

(11) **EP 3 483 477 B1**
(45) Veröffentlichungstag und Bekanntmachung des Hinweises auf die Patenterteilung: **20.01.2021**
(21) Anmeldenummer: 17200603.3
(22) Anmeldetag: 08.11.2017
(51) Int. Cl.: F16H 35/10, F16H 37/04, F16D 7/08, F16H 1/16

(54) **ANTRIEBSANORDNUNG**
DRIVE ASSEMBLY
SYSTÈME D'ENTRAÎNEMENT

(43) Veröffentlichungstag der Anmeldung: 15.05.2019
(73) Patentinhaber: Magna Auteca GmbH, 8160 Krottendorf bei Weiz (AT)
(72) Erfinder: PALVOELGYI, Martin, 8311 Markt Hartmannsdorf (AT); SCHADLER, Bernhard, 8211 Gersdorf an der Feistritz (AT)
(74) Vertreter: Zangger, Bernd

(56) Entgegenhaltungen:
- WO-A1-2011/079981
- DE-A1- 19 520 656
- DE-A1-102014 223 081
- GB-A- 2 424 249
- US-B1- 9 243 700

## Beschreibung

### Gebiet der Erfindung

Die vorliegende Erfindung betrifft eine Antriebsanordnung, geeignet zur Verstellung einer Aerodynamikklappe an einem Fahrzeug.

### Stand der Technik

Im Rahmen von Bestrebungen die Effizienz von Kraftfahrzeugen zu erhöhen wird zunehmend versucht die Aerodynamik des Fahrzeuges aktiv zu verändern. Zu diesem Zwecke werden Teile der Fahrzeugaußenfläche (Klappen, Spoiler, Diffusor, usw.) je nach Fahrgeschwindigkeit elektrisch verstellt, um die Umströmung des Fahrzeuges günstig zu beeinflussen.

Die exponierte Lage der hierfür verwendeten Antriebe bedingt die Notwendigkeit eines wasserdichten Gehäuses. Häufig werden daher dichtgeschweißte Gehäuse verwendet.

Um möglichst effizient die verstellte Klappe gegen den Fahrtwind halten zu können, sind vorzugsweise selbsthemmende Getriebe im Einsatz. Der Antrieb kann in diesem Fall über eine Sicherheitskupplung verfügen, die bei Überlast den Abtrieb freigibt um die daran befestigte Klappe vor Beschädigung zu schützen.

Ein derartiger Antrieb ist in der Schrift WO 2014 205 217 A1 beschrieben.

Um die geforderten hohen Abtriebsmomente zu erreichen, werden in solchen Antriebsanordnungen in der Regel mehrstufige Getriebe verwendet, mit mindestens einer selbsthemmenden Stufe. Eine häufige Bauform ist ein zweistufiges Schneckengetriebe. Vorteilhaft ist bei dieser Bauform die geringe Anzahl an Bauteilen, der große Nachteil ist aber ein schlechter Getriebewirkungsgrad und entsprechend groß dimensionierten Elektromotoren.

Die US 9 243 700 B1 offenbart ein stufenloses Getriebe, das mit einem Eingangsantrieb zusammenwirkt, der eine Eingangswelle dreht, wobei das Getriebe umfasst: nur eine einzelne Planetenradanordnung mit einem Sonnenrad, einer Vielzahl von Planetenrädern, die drehbar auf einem Planetenträger gelagert sind, wobei die Planetenräder das Sonnenrad umlaufend umgeben und mit diesem in Eingriff stehen, und einem Hohlrad, das die Planetenräder umgibt und mit diesen in Eingriff steht; wobei das Sonnenrad an der Eingangswelle befestigt ist; eine Abtriebswelle, die an dem Planetenträger befestigt ist, wobei sich die Abtriebswelle in die gleiche Richtung wie die Eingangswelle dreht und die Leistung auf eine damit funktionell gekoppelte Last überträgt; eine Schneckenradanordnung mit einem Schneckenrad, das mit dem Hohlrad verbunden ist, so dass die Drehbewegung des Schneckenrads das Hohlrad, eine Schneckenwelle und eine Schnecke, die tangential zu dem Schneckenrad ausgerichtet ist und mit diesem in Eingriff steht und an der Schneckenwelle befestigt ist; und einen Steuermotor, der die Schneckenwelle mit einer stufenlos variablen Drehzahl dreht, wodurch die Drehbewegung von der Schnecke auf das Schneckenrad und das Hohlrad übertragen wird und die Drehzahl des Planetenträgers und der Abtriebswelle stufenlos variabel ist.

Es ist bereits bekannt, dass die Abtriebswelle über eine Sicherheitskupplung vom restlichen Getriebe vorzugsweise trennbar ist.

Die WO 2011/079981 A1 offenbart einen Verstellantrieb, insbesondere eines Fahrzeugs, zum Antrieb einer Komponente, mit einer Antriebseinheit, die eine erste Abtriebswelle umfasst, wobei an die erste Abtriebswelle eine Abtriebseinheit oder eine Zwischeneinheit, die zwischen der Antriebseinheit und der Abtriebseinheit angeordnet ist, modular adaptierbar ist. Die Zwischeneinheit kann eine Verbindungswelle aufweisen. Die Verbindungswelle kann auch Zusatzfunktionen umfassen, wie beispielsweise eine Rutschkupplung oder ein Getriebe, die eine mehrstückige Fertigung erfordern. Dann sind die Bestandteile der Verbindungswelle im Wesentlichen koaxial angeordnet.

Die DE 10 2014 223081 A1 offenbart eine Schaltvorrichtungskomponente für ein Schaltgetriebe eines Kraftfahrzeugs, die eine mittels eines Betätigungselements betätigbare Schaltwelle aufweist, wobei die Schaltwelle zumindest teilweise in einem Gehäuse der Schaltvorrichtungskomponente gelagert ist, wobei im Gehäuse eine Zahnkupplung vorgesehen ist, wobei ein erster Teil der Zahnkupplung mit einem zumindest teilweise im Gehäuse gelagerten und mit dem Betätigungselement versehenen Schaft verbunden ist, um bei einem überschreiten einer vom Betätigungselement zu übertragenden Kraft einen Entkupplungsvorgang der Zahnkupplung auszulösen.

Nachteil dieser bekannten Anordnungen ist aber, dass die Kupplung einen großen Platzbedarf hat, wenn große Auskuppelmomente gefordert werden.

### Zusammenfassung der Erfindung

Es ist eine Aufgabe der Erfindung, eine Antriebsanordnung zur Verstellung von Aerodynamikklappen eines Kraftfahrzeuges anzugeben, die die vorher genannten Nachteile vermeidet und insbesondere einen hohen Wirkungsgrad aufweist und dabei einen kleinen Bauraum benötigt.

Die Lösung der Aufgabe erfolgt durch eine Antriebsanordnung mit den Merkmalen gemäß Anspruch 1.

Die Antriebsanordnung umfasst einen Elektromotor, ein mehrstufiges Getriebe, eine Abtriebswelle und mindestens zwei Gehäusehälften, wobei das Getriebe Stirnräder umfasst und mindestens eine selbsthemmende Getriebestufe umfasst, wobei die selbsthemmende Getriebestufe weder die erste noch die letzte Getriebestufe des Getriebes bildet. Erfindungsgemäß wird ein Antrieb zum Verstellen von Aerodynamikklappen eines Kraftfahrzeuges angegeben, der aus einem Elektromotor mit einem mehrstufigen Getriebe, insbesondere Stirnradgetriebe, das also mehrere Getriebestufen ausbildet, und einer selbsthemmenden Stufe besteht. Dieser Aufbau ermöglicht einen größtmöglichen Wirkungsgrad. Dabei bildet die selbsthemmende Getriebestufe weder die erste noch die letzte Getriebestufe des Getriebes.

Erfindungsgemäß bildet die selbsthemmende Stufe die vorletzte Getriebestufe. Die letzte Getriebestufe ist bevorzugt wieder mit Stirnrädern ausgeführt.

Erfindungsgemäß ist zwischen der selbsthemmenden Getriebestufe und der Abtriebswelle eine Sicherheitskupplung angeordnet. Eine solche Sicherheitskupplung kann bei Überlast den Abtrieb freigeben, um die daran befestigte Klappe vor Beschädigung zu schützen. Vorzugsweise ist die Sicherheitskupplung zwischen der selbsthemmenden Getriebestufe und einem mit der Abtriebswelle drehfesten Abtriebsrad angeordnet.

Durch den Verbau einer selbsthemmenden Getriebestufe innerhalb der Stufen des Getriebes kann ein optimales Verhältnis von erforderlicher Kupplungsgröße und Kupplungsmomentschwankungen erreicht werden:
Zwischen der selbsthemmenden Stufe und der letzten Stufe des Stufengetriebes wird eine Sicherheitskupplung untergebracht. Durch diese Anordnung wird das zu übertragende Kupplungsmoment um den Faktor der letzten Getriebeübersetzung reduziert. Die Kupplung benötigt dadurch einen kleinen Bauraum und vereinfacht ein Abtriebsrad und eine Abtriebswelle. Prinzipiell könnte die Sicherheitskupplung an einer Getriebeposition noch näher dem Motor untergebracht sein, insbesondere wenn die selbsthemmende Getriebestufe die erste Getriebestufe der Antriebsvorrichtung wäre, dadurch könnte die Kupplung weiter verkleinert werden, Schwankungen im Kupplungsmoment würden jedoch über alle nachfolgenden Übersetzungen verstärkt und das Kupplungsmoment am Abtrieb würde daher ungenau.

Erfindungsgemäß besteht die Sicherheitskupplung aus zwei über eine Rastkontur miteinander in Verbindung stehenden Zahnrädern, die sich auf einer Hülse befinden und mit einer Druckfeder aneinander gedrückt werden. Die Hülse kann sich auf einer feststehenden Achse frei drehen.

Weiterbildungen der Erfindung sind in den abhängigen Ansprüchen, der Beschreibung sowie den beigefügten Zeichnungen angegeben.

Die Antriebsanordnung kann bevorzugt ein Doppelzahnrad umfassen, wobei das Doppelzahnrad ein großes Zahnrad und ein zum großen Zahnrad koaxiales kleines Zahnrad umfasst, wobei die Sicherheitskupplung zwischen dem großen Zahnrad und dem kleinen Zahnrad wirkt. Vorzugsweise ist ein mit der Abtriebswelle drehfestes Abtriebsrad mit einem federbelasteten Verspannungsrad ausgestattet, welches bei schwankender Last die Zahnflanken der letzten Getriebestufe vor harten Aufschlägen schützt.

Der Drehwinkel des Abtriebs, insbesondere der Abtriebswelle oder eines mit der Abtriebswelle drehfesten Abtriebsrades, kann messtechnisch erfasst werden.

Besonders bevorzugt werden die Lagerstellen der Abtriebswelle alleinig von einem der Gehäuseteile voll umschlossen. Ein Problem ähnlicher Antriebsanordnungen ist nämlich der Umstand, dass Getriebekräfte, hier vor allem die hohen Kräfte im Falle eines Auskuppelns der Sicherheitskupplung, in Gehäuseteile eingeleitet werden, die miteinander verschweißt sind und der Kraftfluss über die Schweißnaht verläuft. Dabei besteht die Gefahr eines Aufreißens der Naht und eines Undichtwerdens des Antriebs, bzw. im schlimmsten Fall sogar des Auseinanderbrechens des Antriebs. Daher wird vorzugsweise die Abtriebswelle von einem der Gehäuseteile voll umschlossen, so dass die Kräfte nicht in Fügezonen der Gehäuseteile aufgenommen werden müssen.

Vorzugsweise wird mindestens eine Getriebeachse einer Getriebestufe in eine Gehäusehälfte eingepresst und werden zumindest alle auf diese Achse wirkenden Radialkräfte alleinig von diesem Gehäuseteil getragen.

Diejenige Gehäusehälfte, in der die Getriebeachse eingepresst wird, ist bevorzugt dieselbe, in welcher auch die Abtriebswelle gelagert ist.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung des Getriebes einer erfindungsgemäßen Antriebsanordnung.
- Fig. 2a: ist eine Schnittdarstellung, welche einen Schnitt A-A, gemäß Fig. 2b, einer Sicherheitskupplung einer erfindungsgemäßen Antriebsanordnung zeigt.
- Fig. 2b: zeigt die Lage der Schnittebene A-A der Fig. 2a in einer Sicherheitskupplung.
- Fig. 2c: ist eine dreidimensionale Explosionsdarstellung der Sicherheitskupplung entsprechend Fig. 2a und 2b.
- Fig. 3: zeigt dreidimensional ein Untergehäuse für eine erfindungsgemäße Antriebsanordnung.
- Fig. 4: zeigt dreidimensional den Einbau von Teilen einer erfindungsgemäßen Antriebsanordnung in ein Untergehäuse gemäß Fig. 3.
- Fig. 5: zeigt dreidimensional das Untergehäuse gemäß Fig. 3 mit verbauten Teilen und Zwischengehäuse.
- Fig. 6a: zeigt die Lage der Schnittebene B-B der Fig. 6b in einer erfindungsgemäßen Antriebsanordnung.
- Fig. 6b: ist eine Schnittdarstellung, welche einen Schnitt B-B, gemäß Fig. 6a, einer erfindungsgemäßen Antriebsanordnung zeigt.

### Detaillierte Beschreibung der Erfindung

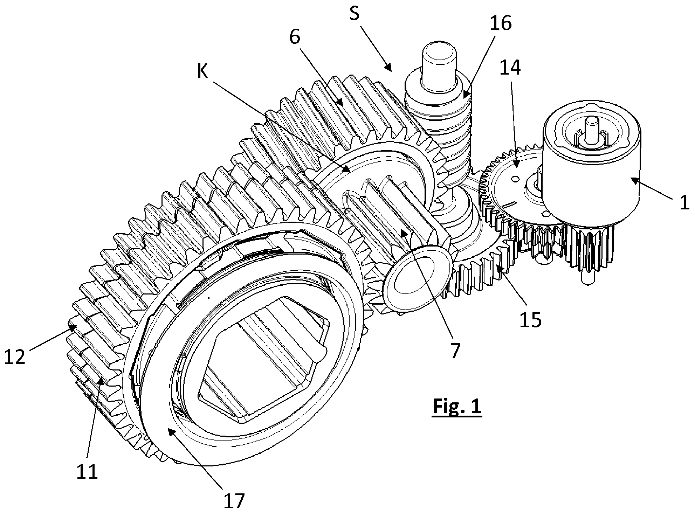

In Fig. 1 ist das Getriebe einer erfindungsgemäßen Antriebsanordnung dargestellt.

Der Rotor des Antriebsmotors 1 dreht sich auf einer stehenden Achse. Auf der Nabe des Rotors ist eine erste Verzahnung ausgebildet, die mit einer Verzahnung am ersten Zahnrad 14 verbunden ist. Das erste Zahnrad 14 ist ein Doppelzahnrad, dass an dessen großen Stirnrad angetrieben ist und über dessen koaxiales, kleines Stirnrad ein Stirnrad 15 der Schnecke treibt, welches auf eine Schnecke 16 aufgespritzt ist.

Die Schnecke 16 und das damit in Eingriff stehende Schneckenrad, nämlich das große Zahnrad 6, bilden die selbsthemmende Getriebestufe S. Anstatt einer Schneckengetriebestufe kann auch eine andere selbsthemmende Stufe verwendet werden, zum Beispiel ein Exzentergetriebe, oder ähnliches.

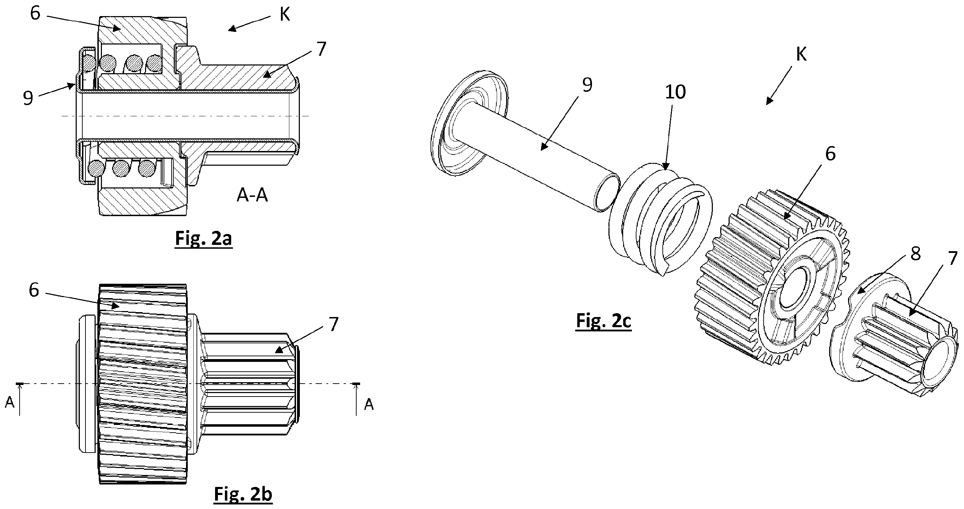

Das große Zahnrad 6 und das kleine Zahnrad 7 sind über eine Sicherheitskupplung K miteinander verbunden, die in den Fig. 2a, 2b und 2c im Detail dargestellt ist. Das kleine Zahnrad 7 ist mit dem Abtriebsrad 11 in Eingriff. Wird am Abtriebsrad 11 ein gewisses Moment überschritten, so löst sich die Sicherheitskupplung K und Abtriebsrad 11 und kleines Zahnrad 7 werden frei drehbar.

Auf das Abtriebsrad 11 ist stirnseitig eine konturierte Blechscheibe 17 aufgepresst. Diese Scheibe 17 bewegt sich bei Drehbewegung des Abtriebrads 11 über in eine Leiterplatte eingebrachte Spulen hinweg und verändert dabei die Induktivität dieser Spulen. Diese Induktivitätsänderung kann zur Bestimmung des Drehwinkels des Abtriebrads 11 herangezogen werden.

Im Weiteren ist am Abtriebsrad 11 ein federbelastetes Verspannungsrad 12 angebracht. Die Verwendung derartiger Verspannungsräder ist zum Zwecke von Geräuschminderung, Vibrationsminderung, usw. an sich bekannt. Zweck des Verspannungsrades 12 ist in diesem Fall, das Vermindern des Aufeinanderschlagens der Zahnflanken der letzten Stufen. Exzessives Zahnspiel führt bei stark schwankenden Lasten zu harten Aufschlägen der Zahnflanken. Im schlimmsten Fall kommt es zu einer plastischen Verformung der Zahnflanken und zu einer weiteren Vergrößerung des Zahnspiels. Es kommt ein selbstverstärkender Mechanismus in Gang der rasch zu Zerstörung des Getriebes führen kann.

Fig. 2 zeigt die Sicherheitskupplung K zwischen großem Zahnrad 6 und kleinem Zahnrad 7, in Fig. 2c dreidimensional, in Fig. 2b als Schnitt A-A, wie in Fig. 2a angezeigt.

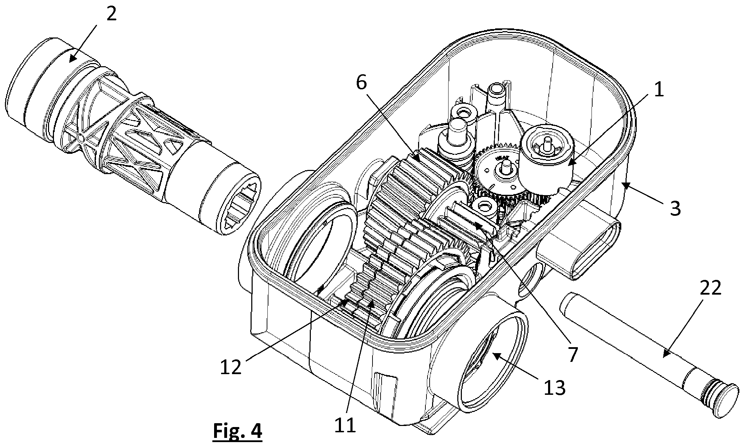

Beide Zahnräder 6 und 7 besitzen eine ineinandergreifende Rastkontur 8 und werden mit einer Druckfeder 10 aneinandergepresst. Bei der Fertigung der Kupplung wird die Feder 10 auf ein gewünschtes Maß gedrückt und die Hülse 9 auf der Seite vom kleinen Zahnrad 7 aufgetaumelt (vernietet). Im Normalbetrieb kann zwischen beiden Zahnrädern 6 und 7 über die Rasten 8 ein Drehmoment übertragen werden und die Kupplung K dreht sich mit der Hülse 9 auf einem im Gehäuse feststehenden Stift, nämlich einem Kupplungsschaft 22 (Fig. 4).

Wird am Abtrieb ein übermäßiges Moment aufgebracht so wird das große Zahnrad 6 von der Schnecke 16 am Drehen gehindert. Die Rasten 8 zwingen das große Zahnrad 6 nun axial gegen die Feder 10, bis die Rastkonturen 8 nicht mehr ineinandergreifen. Das kleine Zahnrad 7 und die Hülse 9 können sich nun bei stehendem großem Zahnrad 6 frei drehen bis die Kupplung K wieder einrastet. Vorteilhaft an dieser Ausführung ist der Umstand dass der Kupplungsmechanismus K kein zusätzliches Getriebespiel erzeugt. Ähnliche Kupplungsmechanismen führen häufig eine Kupplungsseite auf einer Keilwelle, wobei diese Verbindung mit entsprechendem Spiel ausgestattet werden muss um die Verschiebbarkeit zu gewährleisten.

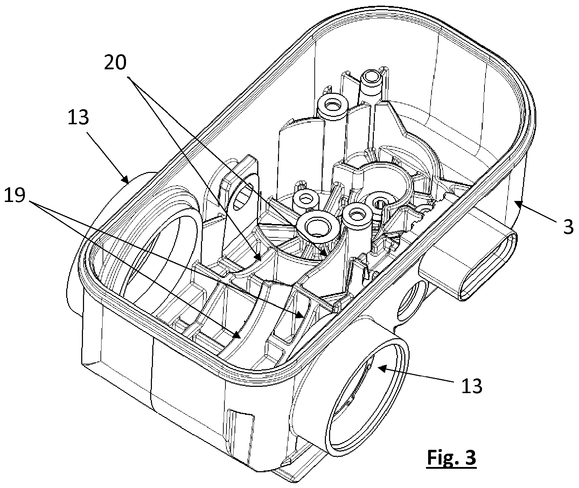

Fig. 3 zeigt einen Schrägriss des Untergehäuses 3. Im Untergehäuse 3 sind Rippen 19, 20 eingebracht, sodass Kupplung K und Abtriebsrad 11 im Untergehäuse 3 eingelegt werden und für die spätere Montage vorpositioniert werden können.

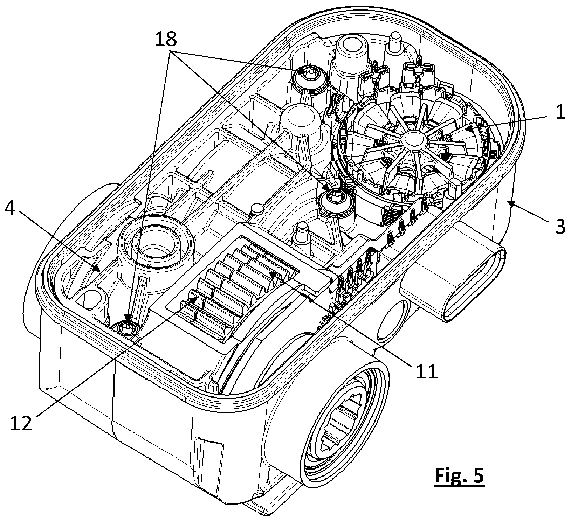

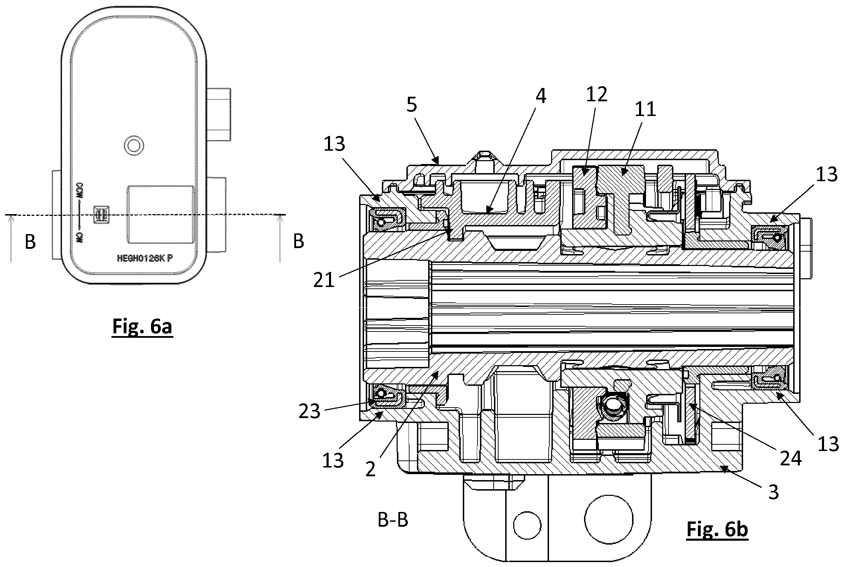

Fig. 4 zeigt das Untergehäuse 3 mit den Getriebeteilen während der Montage. Das Getriebe des Antriebs befindet sich zwischen zwei Gehäuseteilen die miteinander verschraubt werden, nämlich Untergehäuse 3 und Zwischengehäuse 4. Auf das Untergehäuse 3 wird ein Deckel 5 aufgeschweißt um den Antrieb dicht zu Verschließen. Siehe hierzu auch Fig. 5 und 6b.

Die Getriebeteile ohne Achse von Kupplung K und ohne Abtriebswelle 2 werden durch die Rippen 19, 20 im Untergehäuse 3 grob vorpositioniert. Die Kupplungsachse 22 wird von außen in das Untergehäuse 3 eingepresst. Die Abtriebswelle 2 wird von außen in das Untergehäuse 3 und durch das Abtriebsrad 11 geschoben und wird vom Zwischengehäuse 4 axial gehalten (Fig. 5). Durch diese Ausführung werden hohe Lagerkräfte, die zum Beispiel beim Auskuppeln entstehen, nur vom Untergehäuse 3 getragen, ohne Schrauben oder die Schweißnaht zu belasten.

Die Drehmomentübertragung vom Abtriebsrad 11 zur Abtriebswelle 2 erfolgt über eine Sechskantkontur am äußeren Umfang der Abtriebswelle 2. Die Lagerstellen 13 mit der höchsten Belastung werden nun alleinig und vollumschließend vom Untergehäuse 3 gebildet, mit entsprechenden Vorteilen bezüglich Genauigkeit und Festigkeit.

Fig. 5 zeigt den Antrieb mit entferntem Deckel. Das Zwischengehäuse 4 ist mit dem Untergehäuse 3 verschraubt, über Schrauben 18. Alle Getriebeteile und auch der Motor 1 werden von Untergehäuse 3 und Zwischengehäuse 4 gehalten. Der Deckel 5, der am äußeren Rand mit dem Untergehäuse 3 verschweißt wird, dient lediglich der Abdichtung des Antriebs.

Abbildung 6b zeigt einen Schnitt B-B durch den Gesamtantrieb, also die Antriebsanordnung, durch die Achse der Abtriebswelle 2, wie in Fig. 6a angegeben.

Die Abtriebswelle 2 ist an Lagerstellen 13 im Untergehäuse 3 radial gelagert. Die Lagerstellen 13 weisen jeweils Dichtungen 23 auf. Eine Rippe 21 des Zwischengehäuses 4 ragt in eine Nut der Abtriebswelle 2 und sichert diese dadurch in axialer Richtung. Der Deckel 5 ist am äußeren Rand mit dem Untergehäuse 3 verschweißt. Das Abtriebsrad 11 mit dem Verspannungsrad 12 reicht durch eine Öffnung des Zwischengehäuses 4 in den Raum zwischen Zwischengehäuse 4 und Deckel 5. Zwischen dem Zwischengehäuse 4 und dem Deckel 5 ist auch eine Platine 24 angeordnet, zur Durchführung von Winkelmessungen und/oder Winkelberechnungen. Insbesondere kann an der Platine 24 der Drehwinkel des Abtriebsrades 11 bzw. der daran befindlichen konturierten Blechscheibe 17 messtechnisch erfasst werden.

### Bezugszeichenliste

- 1: Elektromotor
- 2: Abtriebswelle
- 3: Untergehäuse
- 4: Zwischengehäuse
- 5: Deckel
- 6: großes Zahnrad
- 7: kleines Zahnrad
- 8: Rastkontur
- 9: Hülse
- 10: Druckfeder
- 11: Abtriebsrad
- 12: Verspannungsrad
- 13: Lagerstellen
- 14: erstes Zahnrad
- 15: Stirnrad der Schnecke
- 16: Schnecke
- 17: konturierte Blechscheibe
- 18: Schraube
- 19: Rippe für Abtriebsrad
- 20: Rippe für Sicherheitskupplung
- 21: Rippe des Zwischengehäuses
- 22: Kupplungsschaft
- 23: Dichtung
- 24: Platine

- S: selbsthemmende Getriebestufe
- K: Sicherheitskupplung

## Patentansprüche

1. Antriebsanordnung, geeignet zur Verstellung einer Aerodynamikklappe an einem Fahrzeug, umfassend einen Elektromotor (1), ein mehrstufiges Getriebe, eine Abtriebswelle (2) und mindestens zwei Gehäusehälften (3, 4, 5), wobei das Getriebe Stirnräder (7, 11, 14, 15) umfasst und mindestens eine selbsthemmende Getriebestufe (S) umfasst,
wobei die selbsthemmende Getriebestufe (S) weder die erste noch die letzte Getriebestufe des Getriebes bildet, wobei zwischen der selbsthemmenden Getriebestufe (S) und der letzten Getriebestufe eine Sicherheitskupplung (K) angeordnet ist, **dadurch gekennzeichnet, dass** die selbsthemmende Getriebestufe (S) die vorletzte Getriebestufe bildet, wobei die Sicherheitskupplung (K) aus zwei über eine Rastkontur (8) miteinander in Verbindung stehenden Zahnrädern (6, 7) besteht, die sich auf einer Hülse (9) befinden und mit einer Druckfeder (10) aneinander gedrückt werden, wobei sich die Hülse (9) auf einer feststehenden Achse frei drehen kann.

2. Antriebsanordnung nach Anspruch 1,
**dadurch gekennzeichnet, dass** die Antriebsanordnung ein Doppelzahnrad (6, 7) umfasst, wobei das Doppelzahnrad (6, 7) ein großes Zahnrad (6) und ein zum großen Zahnrad (6) koaxiales kleines Zahnrad (7) umfasst, wobei die Sicherheitskupplung (K) zwischen dem großen Zahnrad (6) und dem kleinen Zahnrad (7) wirkt.

3. Antriebsanordnung nach zumindest einem der vorhergehenden Ansprüche,
**dadurch gekennzeichnet , dass** ein mit der Abtriebswelle (2) drehfestes Abtriebsrad (11) mit einem federbelasteten Verspannungsrad (12) ausgestattet ist, welches bei schwankender Last die Zahnflanken der letzten Getriebestufe vor harten Aufschlägen schützt.

4. Antriebsanordnung nach zumindest einem der vorhergehenden Ansprüche,
**dadurch gekennzeichnet , dass** der Drehwinkel des Abtriebs, insbesondere der Abtriebswelle (2) oder eines mit der Abtriebswelle (2) drehfesten Abtriebsrades (11), messtechnisch erfasst wird.

5. Antriebsanordnung nach zumindest einem der vorhergehenden Ansprüche,
**dadurch gekennzeichnet , dass** die Lagerstellen (13) der Abtriebswelle (2) alleinig von einem der Gehäuseteile (3) voll umschlossen werden.

6. Antriebsanordnung nach zumindest einem der vorhergehenden Ansprüche,
**dadurch gekennzeichnet , dass** mindestens eine Getriebeachse einer Getriebestufe in eine Gehäusehälfte (3) eingepresst wird und alle auf diese Achse wirkenden Radialkräfte alleinig von diesem Gehäuseteil (3) getragen werden.

7. Antriebsanordnung nach Anspruch 5 und 6,
**dadurch gekennzeichnet , dass** die Gehäusehälfte (3), in der die Getriebeachse eingepresst wird, dieselbe ist, in welcher die Abtriebswelle (2) lagert.

## Claims

1. Drive assembly suitable for adjusting an aerodynamic flap on a vehicle, comprising an electric motor (1), a multistage gear mechanism, an output shaft (2), and at least two housing halves (3, 4, 5), wherein the gear mechanism comprises spur gears (7, 11, 14, 15) and at least one self-locking gear stage (S), wherein the self-locking gear stage (S) forms neither the first nor the last gear stage of the gear mechanism, wherein a safety coupling (K) is disposed between the self-locking gear stage (S) and the last gear stage, **characterized in that** the self-locking gear stage (S) forms the penultimate gear stage, wherein the safety coupling (K) is composed of two gear wheels (6, 7) which are mutually connected via a locking contour (8) and are situated on a sleeve (9) and pressed against each other by a compression spring (10), wherein the sleeve (9) can rotate freely on a fixed shaft.

2. Drive assembly according to Claim 1, **characterized in that** the drive assembly comprises a double gear wheel (6, 7), wherein the double gear wheel (6, 7) comprises a large gear wheel (6) and a small gear wheel (7) coaxial to the large gear wheel (6), wherein the safety coupling (K) acts between the large gear wheel (6) and the small gear wheel (7).

3. Drive assembly according to at least one of the preceding claims,
**characterized in that** an output wheel (11), which is rotationally fixed to the output shaft (2), is equipped with a spring-loaded pretension wheel (12) which protects the tooth flanks of the last gear stage from hard impacts on fluctuating loads.

4. Drive assembly according to at least one of the preceding claims,
**characterized in that** the rotation angle of the output drive, in particular of the output shaft (2) or an output wheel (11) which is rotationally fixed to the output shaft (2), is detected by measurement.

5. Drive assembly according to at least one of the preceding claims,
**characterized in that** the bearing points (13) of the output shaft (2) are fully enclosed solely by one of the housing parts (3).

6. Drive assembly according to at least one of the preceding claims,
**characterized in that** at least one gear shaft of a gear stage is pressed into one housing half (3) and all radial forces acting on this shaft are borne by this housing part (3) alone.

7. Drive assembly according to Claim 5 and 6,
**characterized in that** the housing half (3) in which the gear shaft is pressed is the same as that which supports the output shaft (2).

## Revendications

1. Système d'entraînement apte à régler un volet aérodynamique d'un véhicule, comprenant un moteur électrique (1), une transmission à plusieurs étages, un arbre de prise de force (2) et au moins deux moitiés de boîtier (3, 4, 5), la transmission comprenant des pignons droits (7, 11, 14, 15) et comprenant au moins un étage de transmission autobloquant (S),
l'étage de transmission autobloquant (S) ne formant ni le premier ni le dernier étage de transmission de la transmission, un embrayage de sécurité (K) étant disposé entre l'étage de transmission autobloquant (S) et le dernier étage de transmission,
**caractérisé en ce que** l'étage de transmission autobloquant (S) forme l'avant-dernier étage de transmission, l'embrayage de sécurité (K) se composant de deux roues dentées (6, 7) en liaison l'une avec l'autre par le biais d'un contour d'encliquetage (8), lesquelles se trouvent sur un manchon (9) et sont pressées l'une contre l'autre par un ressort de compression (10), le manchon (9) pouvant tourner librement sur un axe fixe.

2. Système d'entraînement selon la revendication 1, **caractérisé en ce que** le système d'entraînement comprend une double roue dentée (6, 7), la double roue dentée (6, 7) comprenant une grosse roue dentée (6) et une petite roue dentée (7) coaxiale par rapport à la grosse roue dentée (6), l'embrayage de sécurité (K) agissant entre la grosse roue dentée (6) et la petite roue dentée (7) .

3. Système d'entraînement selon au moins l'une des revendications précédentes,
**caractérisé en ce qu'**une roue de prise de force (11) connectée de manière solidaire en rotation à l'arbre de prise de force (2) est munie d'une roue de serrage sollicitée par ressort (12) qui, en cas de variation de charge, protège les flancs de dents du dernier étage de transmission contre des impacts durs.

4. Système d'entraînement selon au moins l'une des revendications précédentes,
**caractérisé en ce que** l'angle de rotation de la prise de force, en particulier de l'arbre de prise de force (2) ou d'une roue de prise de force (11) connectée de manière solidaire en rotation à l'arbre de prise de force (2), est détecté par une technique de mesure.

5. Système d'entraînement selon au moins l'une des revendications précédentes,
**caractérisé en ce que** les points de palier (13) de l'arbre de prise de force (2) sont complètement entourés seulement par l'une des parties du boîtier (3).

6. Système d'entraînement selon au moins l'une des revendications précédentes,
**caractérisé en ce qu'**au moins un axe de transmission d'un étage de transmission est pressé dans une moitié du boîtier (3) et toutes les forces radiales agissant sur cet axe sont supportées seulement par cette partie du boîtier (3) .

7. Système d'entraînement selon les revendications 5 et 6,
**caractérisé en ce que** la moitié du boîtier (3) dans laquelle est pressé l'axe de transmission est celle dans laquelle est supporté l'arbre de prise de force (2).
